# EUROPEAN PATENT SPECIFICATION

(11) **EP 0 752 551 B1**
(45) Date of publication and mention of the grant of the patent: **28.08.2002**
(21) Application number: 96304737.8
(22) Date of filing: 27.06.1996
(51) Int. Cl.: F16J 15/32

(54) **An improved seal arrangement**
Dichtungsvorrichtung
Dispositif de joint

(30) Priority: 03.07.1995 GB 9513507
(43) Date of publication of application: 08.01.1997
(73) Proprietor: Smiths Group plc, London, NW11 8DS (GB)
(72) Inventor: Jones, Norman Stewart, Leighton Buzzard, Bedfordshire LU7 9JF. (GB); Woodroffe , David, Luton LU2 8AX (GB)
(74) Representative: Howden, Christopher Andrew

(56) References cited:
- EP-A- 0 231 673
- DE-A- 1 905 593
- DE-A- 3 126 421
- DE-B- 1 107 467
- DE-B- 1 525 816
- FR-A- 1 113 528
- US-A- 3 525 530

## Description

THIS INVENTION relates to a seal arrangement for effecting a seal between a movable rod, shaft or like element and a passage through which said element extends, for example for sealing a shaft with respect to a bore in which the shaft is movable axially, in a pneumatic system.

One of the key factors in the design of pneumatic systems with sliding elements is the design of the sealing system. Over the years a very large number of such systems have been adopted but all have ultimately been a compromise between achieving a high level of seal integrity and a low level of friction. Considerations of space, cost, tolerance to misalignment, wear rate and required manufacturing tolerances of the containing parts have been other important elements.

The increasing move towards the use of non lubricated air in pneumatic systems has emphasised the problem of achieving low friction, in order to reduce wear and to obtain other advantages associated with low friction.

Known sealing systems have used a range of designs and employed a variety of materials, combinations of materials and lubricants. One of the simplest seal arrangements is the elastomeric 'O' ring and this is still widely used for both static and dynamic sealing. Used in the conventional mode the 'O' ring is installed so that it is under constant radial compression. This gives good sealing but because of the tolerances involved and the way in which it is loaded pneumatically it tends to suffer from high wear rates and be intolerant to misalignment.

An alternative method of using an 'O' ring is to use it in the so-called 'floating' mode. In this mode the ring is installed with a nominal interference with the sliding surface but with radial clearance in the groove, receiving the 'O' ring, in the member which slides relative to that sliding surface. In this mode the pressure exerted by the ring on the sliding surface is much reduced and hence so is the friction. The problem with this arrangement is that sealing can now only be achieved if the 'O' ring is in contact with the groove wall which is exposed to the lower pressure of any differential across the seal. In some designs it is not difficult to ensure that this is so but in many applications it is possible for conditions to arise which lift the seal off that groove wall. This is particularly true during start up conditions when pressure is first applied. Once a flow is established around under the 'O' ring there is no pressure force to push it towards the respective groove wall to establish sealing. It is normal, therefore, to limit the axial clearance between the groove and the 'O' ring section to a dimension below which the ring becomes essentially bistable. At the opposite extreme it is not possible to use too small an axial clearance between the 'O' ring and the groove because in this case, when pressure is first applied during start-up, the pressure forces the ring down into the groove and once flow is established over the top of the ring sealing cannot be restored.

The net result of these limitations is that, to be sure of reliable operation of floating 'O' rings, clearances must be held to a tolerance of the order of 0.05 mm. International Standards for 'O' ring dimensions only require the section of smaller 'O' rings to be within ± 0.08 mm. Therefore, selection of 'O' rings and matching with grooves is necessary to ensure that a floating 'O' ring operates satisfactorily. Even with this care, additional attention has to be paid to the amount of grease applied as too much on the side of the ring can create the same effect as too narrow a groove.

It is an object of the present invention to provide an improved seal arrangement which avoids the above-noted disadvantages.

A sealing arrangement according to preamble of claim 1 is shown by FR-A-1113528.

FR-A-1113528 discloses a sealing arrangement for a piston slidable in a bore, in which a circumferential groove around the piston accommodates two "O" rings, one of which bears on the wall of the bore and also on the one wall of the groove and the other of which acts as a biasing element, bearing, on the one hand on the opposite wall of the groove and on the bottom of the groove and, on the other hand, on the first "O" ring. A ring of metal gauze is interposed between the two "O" rings to allow passage of fluid between the region between the piston and the bore and the region adjacent the bottom of the groove.

DE-B-1525816 discloses a sealing arrangement for a piston slidable in a bore, in an oleo - pneumatic supension system for a vehicle. In this arrangement, a piston slidable in a bore, has a circumferential groove which accommodates an annular sealing ring of rubber or plastics and which is of generally rectangular cross- section. This sealing ring bears on the wall of the bore and also on the one wall of the groove. The groove around the piston also accommodates an elastic biasing ring which is located by the bottom of the groove and is spaced from the bore, the elastic biasing ring acting between the sealing ring and the wall of the groove opposite that against which the sealing ring bears. The elastic biasing ring has transverse grooves across its face which engages the sealing ring to allow passage of fluid between the region between the piston and the bore and the region adjacent the bottom of the groove.

According to one aspect of the invention there is provided a pneumatic system including a shaft movable axially with clearance in a cylindrical bore and a seal arrangement providing a seal between the bore and the shaft such that, in use, the portion of the clearance gap between the bore and the shaft disposed on one side of the sealing arrangement is exposed to compressed air or other gas and the portion of said clearance gap disposed on the other side of the seal arrangement is exposed to a lower pressure, said sealing arrangement comprising a floating elastomeric sealing ring in the form of an "O" ring which is accommodated in a circumferential groove around said shaft and which sealingly engages the wall of said bore, said groove comprising a first wall and an opposing second wall each perpendicular to the axis of said bore and shaft and spaced apart along said axis, the seal arrangement including an annular resilient biasing element also accommodated in said groove, the biasing element acting between said first wall of said groove and the "O" ring and serving to urge the "O" ring against said second wall of said groove characterised in that the annular biasing element has a flat face engaging the "O" ring and which face is perpendicular to the axis of said shaft and bore so as to bias the "O" ring axially towards said second wall of the groove, the biasing element being configured to allow the passage of fluid past it between the region of the groove disposed radially inwardly of the "O" ring and the gap between said rod and bore on the side of the "O" ring opposite said second wall of the groove.

According to another aspect of the invention there is provided a pneumatic system including a shaft movable axially with clearance in a cylindrical bore and a seal arrangement providing a seal between the bore and the shaft such that, in use, the portion of the clearance gap between the bore and the shaft disposed on one side of the sealing arrangement is exposed to compressed air or other gas and the portion of said clearance gap disposed on the other side of the seal arrangement is exposed to a lower pressure, said sealing arrangement comprising a floating elastomeric sealing ring in the form of an "O" ring which is accommodated in a circumferential groove around said bore, and which sealingly engages the surface of the shaft, said groove comprising a first wall and an opposing second wall each perpendicular to the axis of said bore and shaft and spaced apart along said axis, the seal arrangement including an annular resilient biasing element also accommodated in said groove, the biasing element acting between said first wall of said groove and the "O" ring and serving to urge the "O" ring against said second wall of said groove, the annular biasing element having a flat face engaging the "O" ring and which face is perpendicular to the axis of said shaft and bore so as to bias the "O" ring axially towards said second wall of the groove, the biasing element being configured to allow the passage of fluid past it between the region of the groove disposed radially outwardly of the "O" ring and the gap between said rod and bore on the side of the "O" ring opposite said second wall of the groove.

The invention allows the advantages of "floating" "O" rings or similar "floating" sealing rings to be achieved without most of the disadvantages.

Embodiments of the invention are described below by way of example with reference to the accompanying drawings, in which:-
FIGURE 2 is a fragmentary diagrammatic sectional view of a seal arrangement embodying the invention, and
FIGURES 3a and 3b are fragmentary diagrammatic views of further seal arrangements embodying the invention.

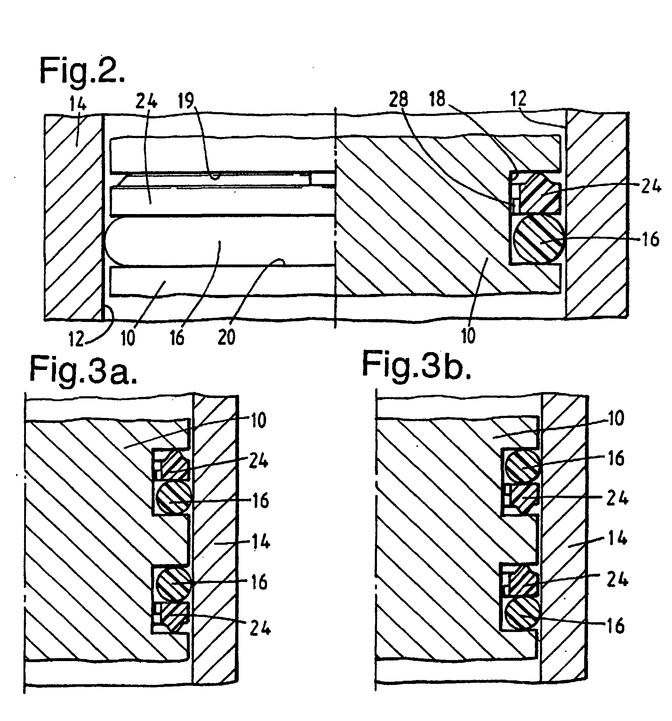

In the embodiments of the invention illustrated in Figures 2 to 3b of the drawings, a seal arrangement embodying the invention is used to seal a generally cylindrical, axially movable rod, shaft or piston 10 (herein referred to for convenience as shaft 10), with respect to a cylindrical bore 12 in a member 14 through which the shaft extends. In the description which follows, it is assumed that the shaft 10 and member 14 are incorporated in a pneumatic system, i.e. a system utilising compressed air or other gas, to which is exposed the portion, above the sealing arrangement, of the clearance gap between the shaft and the bore, the portion of said gap below the sealing arrangement being exposed to a lower pressure, e.g. to atmospheric pressure. The sealing arrangement includes an elastomeric 'O' ring 16 accommodated in a circumferential groove 18 in the shaft 10, the groove being of rectangular shape in section along the shaft axis, having upper and lower planar annular "side" walls 19 and 20 respectively and a cylindrical bottom wall 21 defining the radially innermost limit of the groove. As shown, the 'O' ring is used in the "floating mode", that is to say it is so dimensioned that the radially outermost (with respect to the axis of shaft 10) part of its surface sealingly engages the bore 12 as a light interference fit, whilst a clearance exists between the 'O' ring and the bottom wall 21 of the groove.

It will be understood that in this floating mode, in order for the 'O' ring to effect a seal between shaft 10 and bore 12, it is necessary for the 'O' ring to engage sealingly one of the opposing side walls of the groove. In the illustrated arrangements in Figures 1 and 2 the 'O' ring engages the lower "side" wall 20 of the groove, such engagement being ensured by a resilient biasing or loading element (referenced 22 in Figure 1 and 24 in Figure 2). The biasing element 22, 24 is located in the groove immediately above the 'O' ring, i.e. on the high pressure side of the seal, the width of the groove being sufficient to accommodate both the 'O' ring and the loading element with the loading element 22, 24 under appropriate axial compression. The biasing element 22, 24 has the following characteristics:-
(a) It applies substantially equally distributed axial pressure on the 'O' ring 16 to keep it in contact with the downstream wall 20.
(b) It allows an adequate flow of gas to pass it both radially and axially to ensure that the applied pneumatic pressure is immediately transferred to the side of the 'O' ring that loads it against the sliding surface 12, and to balance any radially inwardly directed component of the gas pressure on the radially outer region of the 'O' ring which might otherwise tend to force the 'O' ring into the groove 18.

To satisfy condition (a) the annular biasing element 22, 24 must apply sufficient pressure to keep the seal 16 on the lower pressure wall 20 even when the seal carrier 10 is moving in the direction of the pressure, i.e. downwardly in the examples shown in Figures 1 and 2, when the pressure differential is small and when the lubrication is marginal. On the other hand it must not apply so much axial pressure that the seal cannot align itself readily, again under marginal lubrication conditions. All these conditions must be met throughout the range of combinations of tolerances of the constituent parts. This means that for a typical 1.78 mm section 'O' ring the force must be within the above restraints over a tolerance range of the order of 0.25 mm.

The biasing element in the embodiments of Figures 2 to 3b is an elastomeric loading ring 24 as shown in Figure 2. In the left half of Figure 2, the member 14 is shown in section and the shaft 10, 'O' ring 16 and loading ring 24 are shown in elevation. In the right half of Figure 2, the member 14, shaft 10, and rings 16 and 24 are all shown in section along the shaft axis, to illustrate the profile of the ring 24. In Figure 2, the elastomeric loading ring is placed in the widened groove 18, with the 'O' ring 16.. This loading ring 24 has four main characteristics. It has a profile on the axial face, remote from the 'O' ring, which has a progressive deformation characteristic but which is stable and is not stressed beyond the fatigue limit of the material. It has a smooth face on the side which butts up against the 'O' ring. It has a means of centralising itself relative to the axis of the 'O' ring groove 18 so that its outer edge of the loading ring does not rub on the bore 12, with a consequent increase in friction, but at the same time there must be a free passage for gas over the inner edge of the loading ring so that the inside of the floating 'O' ring can be energised without restriction. In the design shown in Figure 2, this centralisation is achieved by nodules 28 on the radially inner side of the loading ring 24, which nodules contact the bottom 21 of the groove. Finally, the ring must be so formed, on the face remote from the 'O' ring 16 as to allow free passage of gas to the bottom of the groove even when the deformable element 24 is compressed to its maximum limit. This may be achieved by the provision of one or more grooves extending generally radially across the upper (in Figure 2) surface of the loading ring 24. It will be appreciated that the same effect might be achieved by forming transverse bores through the material of the loading ring or by providing the loading ring with transverse grooves on its side engaging the 'O' ring.

A ring to the design of Figure 2 has been shown to have the characteristics required, i.e. it will allow "floating" 'O' rings to operate under a wide range of pressure differential situations when assembled with a total tolerance of components (groove width + 'O' ring section + loading ring) of 0.25 mm and when lubricated between the extremes of fully packed to effectively dry.

The arrangement described is suitable for single acting systems where sealing is only required with the pressure differential acting in one direction. In double acting systems two seal assemblies are used in adjacent grooves as shown in Figures 3(a) and 3(b), each sealing assembly comprising an 'O' ring 16 and a loading ring 24, of the type shown in Figure 2, disposed in a respective groove. Each sealing assembly seals when exposed to a pressure differential in one direction and gives free flow to gas pressurised to the opposite differential. In this way there is no problem with gas trapping between seals which can be a problem in certain other double seal arrangements. Thus, in Figure 3(a) the upper sealing assembly provides a seal when the pressure above both sealing assemblies exceeds that below the sealing assemblies and the lower sealing assembly provides a seal when the pressure below both sealing assemblies exceeds that above the sealing assemblies. In the arrangement of Figure 3(b) the lower sealing assembly provides a seal when the pressure above both sealing assemblies is the greater and the upper sealing assembly provides a seal when the pressure below both sealing assemblies is the greater.

It will be appreciated that the sealing arrangements according to the invention may, at choice, be accommodated, as shown, in grooves formed around a rod or piston 10 for engagement with a smooth bore 12, or may be accommodated in circumferential grooves around a bore 12, for engagement with the smooth surface of a rod 10.

In the arrangements described above with reference to the drawings, the loading ring is an item separately formed from the 'O' ring but in some arrangements (not shown) the 'O' ring/loading ring combination may be replaced by a unitary sealing ring having a sealing portion engaging the bore 12 and the groove wall on the low pressure side of the seal and having a clearance with respect to the groove bottom, and an integral loading portion extending from the sealing portion towards the groove wall on the high pressure side of the seal and engaging the last-mentioned groove wall, the loading portion having transverse grooves to allow free passage of gas from the high pressure part of the sealed gap to the region of the groove between the groove bottom and the sealing portion. The sealing portion of the sealing ring may be part circular in half axial section, with a sealing surface with at least one quarter of the profile in the form of the 'O' ring and the other sector in the form of the loading ring.

It will also be understood that whilst, in the examples described above, it has been assumed that the rod 10 is slidable along the bore 12, the seal will be equally effective for a rod 10 rotating in the bore 12.

The features disclosed in the foregoing description, and/or in the accompanying drawings may, both separately and in any combination thereof, be material for realising the invention in diverse forms thereof within the scope of the appended claims.

## Claims

1. A pneumatic system including a shaft (10) movable axially with clearance in a cylindrical bore (12) and a seal arrangement (16) providing a seal between the bore (11) and the shaft (10) such that, in use, the portion of the clearance gap between the bore and the shaft disposed on one side of the sealing arrangement is exposed to compressed air or other gas and the portion of said clearance gap disposed on the other side of the seal arrangement is exposed to a lower pressure, said sealing arrangement comprising a floating elastomeric sealing ring (16) in the form of an "O" ring which is accommodated in a circumferential groove (18) around said shaft (10) and which sealingly engages the wall of said bore (12), said groove comprising a first wall (19) and an opposing second wall (20) each perpendicular to the axis of said bore and shaft and spaced apart along said axis, the seal arrangement including an annular resilient biasing element, in the form of an elastomeric loading ring (24), also accommodated in said groove, the loading ring (24) acting between said first wall (19) of said groove and the "O" ring (16) and serving to urge the "O" ring (16) against said second wall (20) of said groove **characterised in that** the loading ring (24) has a flat face engaging the "O" ring and which face is perpendicular to the axis of said shaft (10) and bore (11) so as to bias the "O" ring (16) axially towards said second wall (20) of the groove, the loading ring (24) being configured to allow the passage of fluid past it between the region of the groove (18) disposed radially inwardly of the "O" ring (16) and the gap between said rod and bore on the side of the "O" ring opposite said second wall (20) of the groove, and wherein, at least at some circumferential positions therearound, the loading ring has a cross-sectional profile which reduces in radial width towards said first groove wall (19) whereby a progressive deformation characteristic is obtained.

2. A pneumatic system including a shaft movable axially with clearance in a cylindrical bore and a seal arrangement providing a seal between the bore and the shaft such that, in use, the portion of the clearance gap between the bore and the shaft disposed on one side of the sealing arrangement is exposed to compressed air or other gas and the portion of said clearance gap disposed on the other side of the seal arrangement is exposed to a lower pressure, said sealing arrangement comprising a floating elastomeric sealing ring in the form of an "O" ring which is accommodated in a circumferential groove around said bore, and which sealingly engages the surface of the shaft, said groove comprising a first wall and an opposing second wall each perpendicular to the axis of said bore and shaft and spaced apart along said axis, the seal arrangement including an annular resilient biasing element, in the form of an elastomeric loading ring, also accommodated in said groove, the loading ring acting between said first wall of said groove and the "O" ring and serving to urge the "O" ring against said second wall of said groove, the loading ring having a flat face engaging the "O" ring and which face is perpendicular to the axis of said shaft and bore so as to bias the "O" ring axially towards said second wall of the groove, the loading ring being configured to allow the passage of fluid past it between the region of the groove disposed radially outwardly of the "O" ring and the gap between said rod and bore on the side of the "O" ring opposite said second wall of the groove, and wherein, at least at some circumferential positions therearound, the loading ring has a cross-sectional profile which reduces in radial width towards said first groove wall (19) whereby a progressive deformation characteristic is obtained.

3. A seal arrangement according to claim 1 or claim 2 wherein said loading ring (24) has at least one recess or groove extending across its surface facing towards said first wall (19) of said groove (18), to permit said passage of fluid past the loading ring (24).

## Patentansprüche

1. Pneumatikvorrichtung mit einem axial in einer zylinderischen Bohrung (12) mit Spiel bewegbaren Schaft (19) und einer Dichtungsanordnung (16), welche eine Dichtung zwischen der Bohrung (11) und dem Schaft (10) in der Weise schafft, daß beim Gebrauch der Teil des Spiels zwischen der Bohrung und dem Schaft, welcher auf einer Seite der Dichtungsanordnung angeordnet ist, komprimierter Luft oder einem anderen komprimierten Gas ausgesetzt ist und der Teil des Spiels, der auf der anderen Seite der Dichtungsanordnung angeordnet ist, einem niedrigeren Druck ausgesetzt ist, wobei die Dichtungsanordnung einen gleitenden Elastomerdichtring (16) mit der Form eines O-Rings umfaßt, welcher in einer Umfangsnut (18) um den Schaft (10) herum aufgenommen ist und welcher dichtend mit der Wand der Bohrung (12) zusammenwirkt, wobei die Nut eine erste Wand (19) und eine entgegengesetzte zweite Wand (20) umfaßt, welche jeweils senkrecht zu der Achse der Bohrung und dem Schaft ausgebildet sind und entlang der Achse voneinander getrennt sind, wobei die Dichtungsanordnung ein ringförmiges, elastisches Vorspannelement mit der Form eines Elastomerbelastungsrings (24) umfaßt, welcher ebenfalls in der Nut aufgenommen ist, wobei der Belastungsring (24) zwischen der ersten Wand (19) der Nut und dem O-Ring (16) wirkt und dazu dient, den O-Ring gegen die zweite Wand (20) der Nut zu drängen, **dadurch gekennzeichnet, daß** der Belastungsring (24) eine flache mit dem O-Ring ineinander greifende Vorderseite aufweist, die senkrecht zu der Achse des Schafts (10) und der Bohrung (11) ausgebildet ist, um den O-Ring (16) axial in Richtung auf die zweite Wand (20) der Nut vorzuspannen, wobei der Belastungsring (24) so gestaltet ist, daß er einen Durchtritt eines Fluids an ihm vorbei zwischen der Region der Nut (18), welche radial einwärts von dem O-Ring (16) angeordnet ist, und der Lücke zwischen dem Schaft und der Bohrung auf der Seite des O-Rings entgegengesetzt zur zweiten Wand (20) der Nut zuläßt, und wobei wenigstens an einer Umfangsstelle hierum der Belstungsring ein Querschnittsprofil aufweist, welches sich in der radialen Breite zu der ersten Nutwand (19) hin verjüngt, wodurch eine fortschreitende Verformungscharakteristik erhalten wird.

2. Pneumatikvorrichtung mit einem axial in einer zylinderischen Bohrung mit Spiel bewegbaren Schaft und einer Dichtungsanordnung, welche eine Dichtung zwischen der Bohrung und dem Schaft in der Weise schafft, daß beim Gebrauch der Teil des Spiels zwischen der Bohrung und dem Schaft, welcher auf einer Seite der Dichtungsanordnung angeordnet ist, komprimierter Luft oder einem anderen komprimierten Gas ausgesetzt ist und der Teil des Spiels, der auf der anderen Seite der Dichtungsanordnung angeordnet ist, einem niedrigeren Druck ausgesetzt ist, wobei die Dichtungsanordnung einen gleitenden Elastomerdichtring mit der Form eines O-Rings umfaßt, welcher in einer Umfangsnut um die Bohrung herum aufgenommen ist und welche dichtend mit der Oberfläche des Schafts zusammenwirkt, wobei die Nut eine erste Wand und eine entgegengesetzte zweite Wand umfaßt, welche jeweils senkrecht zu der Achse der Bohrung und dem Schaft ausgebildet sind und entlang der Achse voneinander getrennt sind, wobei die Dichtungsanordnung ein ringförmiges, elastisches Vorspannelement mit der Form eines Elastomerbelastungsrings umfaßt, welcher ebenfalls in der Nut aufgenommen ist, wobei der Belastungsring zwischen der ersten Wand der Nut und dem O-Ring wirkt und dazu dient, den O-Ring gegen die zweite Wand der Nut zu drängen, wobei der Belastungsring eine flache mit dem O-Ring ineinander greifende Vorderseite aufweist, die senkrecht zu der Achse des Schafts und der Bohrung ausgebildet ist, um den O-Ring axial in Richtung auf die zweite Wand der Nut vorzuspannen, wobei der Belastungsring so gestaltet ist, daß er einen Durchtritt eines Fluids an ihm vorbei zwischen der Region der Nut, welche radial nach außen von dem O-Ring angeordnet ist, und der Lücke zwischen dem Schaft und der Bohrung auf der Seite des O-Rings entgegengesetzt zur zweiten Wand der Nut zuläßt, und wobei wenigstens an einer Umfangsstelle hierum der Belastungsring ein Querschnittsprofil aufweist, welches sich in der radialen Breite zu der ersten Nutwand hin verjüngt, wodurch eine fortschreitende Verformungscharakteristik erhalten wird.

3. Pneumatikvorrichtung nach Anspruch 1 oder 2, **dadurch gekennzeichnet, daß** der Belastungsring (24) wenigstens einen Einschnitt oder eine Nut aufweist, die sich über dessen der ersten Wand (19) der Nut (18) zugewandte Oberfläche erstreckt, um den Durchtritt eines Fluids an dem Belastungsring (24) vorbei zu erlauben.

## Revendications

1. Système pneumatique comprenant un arbre (10) mobile axialement avec un jeu dans un alésage cylindrique (12) et un agencement d'étanchéité (16) réalisant un joint d'étanchéité entre l'alésage (11) et l'arbre (10) de telle sorte qu'en fonctionnement, la partie de l'espace de jeu entre l'alésage et l'arbre disposée d'un côté de l'agencement d'étanchéité soit exposée à de l'air comprimé ou à un autre gaz et la partie dudit espace de jeu disposée de l'autre côté de l'agencement d'étanchéité soit exposée à une pression inférieure, ledit agencement d'étanchéité comprenant une bague d'étanchéité en élastomère flottante (16) sous la forme d'un joint torique qui est reçu dans une gorge circonférentielle (18) autour dudit arbre (10) et qui se met en prise de manière étanche avec la paroi dudit alésage (12), ladite gorge comprenant une première paroi (19) et une deuxième paroi opposée (20) perpendiculaires chacune à l'axe desdits alésage et arbre et espacées le long dudit axe, l'agencement d'étanchéité comprenant un élément de sollicitation élastique annulaire, sous la forme d'une bague de chargement en élastomère (24), également reçu dans ladite gorge, la bague de chargement (24) agissant entre ladite première paroi (19) de ladite gorge et le joint torique (16) et servant à pousser le joint torique (16) contre ladite deuxième paroi (20) de ladite gorge, **caractérisé en ce que** la bague de chargement (24) comporte une face plate en prise avec le joint torique et laquelle face est perpendiculaire à l'axe desdits arbre (10) et alésage (11) de manière à appliquer le joint torique (16) axialement vers ladite deuxième paroi (20) de la gorge, la bague de chargement (24) étant configurée de manière à permettre le passage de fluide au-delà de celle-ci entre la région de la gorge (18) disposée radialement à l'intérieur du joint torique (16) et l'espace entre ladite tige et l'alésage du côté du joint torique opposé à ladite deuxième paroi (20) de la gorge, et dans lequel, au moins à certaines positions circonférentielles autour de celle-ci, la bague de chargement présente un profil en coupe qui diminue en largeur radiale vers ladite première paroi de gorge (19) de telle manière qu'une caractéristique de déformation progressive soit obtenue.

2. Système pneumatique comprenant un arbre mobile axialement avec un jeu dans un alésage cylindrique et un agencement d'étanchéité réalisant un joint d'étanchéité entre l'alésage et l'arbre de telle sorte qu'en fonctionnement, la partie de l'espace de jeu entre l'alésage et l'arbre disposée d'un côté de l'agencement d'étanchéité soit exposée à de l'air comprimé ou à un autre gaz et la partie dudit espace de jeu disposée de l'autre côté de l'agencement d'étanchéité soit exposée à une pression inférieure, ledit agencement d'étanchéité comprenant une bague d'étanchéité en élastomère flottante sous la forme d'un joint torique qui est reçu dans une gorge circonférentielle autour dudit alésage, et qui se met en prise de manière étanche avec la surface de l'arbre, ladite gorge comprenant une première paroi et une deuxième paroi opposée perpendiculaires chacune à l'axe desdits alésage et arbre et espacées le long dudit axe, l'agencement d'étanchéité comprenant un élément de sollicitation élastique annulaire, sous la forme d'une bague de chargement en élastomère, également reçu dans ladite gorge, la bague de chargement agissant entre ladite première paroi de ladite gorge et le joint torique et servant à pousser le joint torique contre ladite deuxième paroi de ladite gorge, la bague de chargement comportant une face plate en prise avec le joint torique et laquelle face est perpendiculaire à l'axe desdits arbre et alésage de manière à appliquer le joint torique axialement vers ladite deuxième paroi de la gorge, la bague de chargement étant configurée de manière à permettre le passage de fluide au-delà de celle-ci entre la région de la gorge disposée radialement à l'extérieur du joint torique et l'espace entre ladite tige et l'alésage du côté du joint torique opposé à ladite deuxième paroi de la gorge, et dans lequel, au moins à certaines positions circonférentielles autour de celle-ci, la bague de chargement présente un profil en coupe qui diminue en largeur radiale vers ladite première paroi de gorge (19) de telle manière qu'une caractéristique de déformation progressive soit obtenue.

3. Agencement d'étanchéité selon la revendication 1 ou la revendication 2, dans lequel ladite bague de chargement (24) comporte au moins un évidement ou une gorge s'étendant en travers de sa surface orientée vers ladite première paroi (19) de ladite gorge (18) afin de permettre ledit passage de fluide au-delà de la bague de chargement (24).
